# EUROPÄISCHE PATENTANMELDUNG

(11) **EP 0 545 182 A1**
(43) Veröffentlichungstag der Anmeldung: **09.06.1993**
(21) Anmeldenummer: 92119860.2
(22) Anmeldetag: 21.11.1992
(51) Int. Cl.: A42B 3/06, A42C 2/00, B29C 51/14, B32B 27/12, F41H 1/08, F41H 5/04

(54) **Helm, insbesondere Schutz- bzw. Sturzhelm**

(30) Priorität: 05.12.1991 DE 4140044
(71) Anmelder: UVEX WINTER OPTIK GmbH, D-90766 Fürth (DE)
(72) Erfinder: Börger, Herbert, Dr.-Ing., D-8500 Nürnberg (DE)
(74) Vertreter: Rau, Manfred, Dr. Dipl.-Ing.

(57) **Zusammenfassung**

Bei einem Helm insbesondere einem Schutz- bzw. Sturzhelm, umfassend eine hartschalenartige, äußere Helmkalotte aus einem Kunststoff hoher Festigkeit und Flexibilität und eine innere Helmkalotte aus weichem Kunststoff, wie Hartschaum oder dergleichen, ist zur Erzielung einer hohen Schutzwirkung bei niedrigem Gewicht und vorteilhafter Herstellbarkeit vorgesehen, daß er eine selbsttragende, äußere Helmkalotte aufweist, die gebildet ist durch eine Schicht aus thermoplastischem Kunststoff und wenigstens einer Schicht aus Verstärkungsfasern, wobei die beiden Schichten durch gemeinsames Tiefziehen bei einer Temperatur über dem Schmelzpunkt des Kunststoffes in die Kalottenform gebracht sind.

## Beschreibung

Die Erfindung richtet sich auf einen Helm, insbesondere auf einen Schutzbzw. Sturzhelm für Motorradfahrer, Radfahrer, Arbeiter und Sportler umfassend eine hartschalenartige äußere Helmkalotte aus einem Kunststoff hoher Festigkeit und Flexibilität und eine innere Helmkalotte aus weichem Kunststoff, wie Hartschaum oder dergleichen.

Derartige Helme werden herkömmlicherweise vor allem mit einer äußeren Helmschale aus Polycarbonat realisiert, wobei diese äußere Helmschale durch Spritzgießen hergestellt wird. Es sind auch äußere Helmkalotten aus glasfaserverstärktem Kunststoff bekannt, wobei dann die Herstellung mehr oder weniger handwerklich durch wechselweises Aufbringen einer Schicht aus Kunststoff und aus Glasfasergewebe auf bzw. in eine Form erfolgt. Eine solche Herstellungstechnik eignet sich nicht für eine moderne Massenproduktion.

Darüberhinaus weisen die bekannten Helme ein - bezogen auf die an sie zu stellenden Schutzanforderungen - relativ hohes Gewicht auf. Dies verstärkt bei Motorradfahrern und Radfahrern die Abneigung zum Tragen eines Schutzhelms. Bei Sporthelmen, wie sie z.B. bei Rennfahrern, Reitern, Bergsteigern, Paraglidern und Rollerskatern verwendet werden, ist die Lichtigkeit des Helms von besonderer Bedeutung, um den Sportler bei seiner sportlichen Aktivität möglichst wenig zu behindern.

Eine sehr übersichtliche Zusammenstellung der verschiedenen Helmmaterialien für Helme der in Betracht stehenden Art, insbesondere für Fahrradhelme, findet sich z.B. in der Zeitschrift "Bicycling", Mai 1986, Seite 32 und 33.

Hiervon ausgehend liegt der Erfindung die Aufgabe zugrunde, einen Helm der eingangs genannten Art so weiterzubilden, daß eine rationelle, großtechnische Herstellung einerseits und eine deutliche Verbesserung der spezifischen Schutzwirkung bezogen auf das Helmgewicht und die Dicke der Helmkalotte erreicht werden.

Diese Aufgabe wird erfindungsgemäß dadurch gelöst, daß die äußere Helmkalotte aus einer Schicht aus thermoplastischem Kunststoff und wenigstens einer Schicht aus Verstärkungsfasern besteht, wobei die beiden Schichten durch gemeinsames Tiefziehen bei erhöhter Temperatur in die Kalottenform gebracht sind.

Es ist zwar an sich bekannt, für die äußere Helmkalotte auch thermoplastische Kunststoffe, wie z.B. Polycarbonat, zu verwenden, jedoch wurden die thermoplastischen Eigenschaften dieser Kunststoffe bisher nicht ausgenutzt, d.h. die Helmherstellung erfolgte bei Raumtemperatur. Demgegenüber liegt eine Besonderheit der erfindungsgemäßen Lösung darin, daß die Kalotte durch ein warmplastisch verformtes Laminat aus einer Schicht aus thermoplastischem Kunststoff und einer ggfls. kunststoffgetränkten Verstärkungsfaserschicht besteht. Durch das Tiefziehen wird eine rationelle Fertigung erzielt und gleichzeitig wird ein sich in besonders vorteilhafter Weise auf die Festigkeitseigenschaften auswirkendes Verziehen der Verstärkungsschicht zusammen mit der Kunststoffschicht erreicht.

Dies führt zu der angestrebten hohen Festigkeit bei vergleichsweise geringer Dicke der Helmkalotte.

Es ist zwar an sich bekannt, Platten aus thermoplastischem Kunststoff mit Faserverstärkung für individuelle, spezielle Anwendungszwecke, wie z.B. in der Raumfahrt, heranzuziehen. Für eine großtechnische Produktion ist die Verwendung solcher Werkstoffe jedoch nicht bekannt, insbesondere nicht für die Herstellung von Schutzhelmen.

Durch einen Anteil von mindestens 40 Volumen-% an Fasern wird die sehr hohe Festigkeit erreicht, die zur Erzielung einer wirksamen Schutzfunktion erforderlich ist.

Als Verstärkungsfasern kommen Glas-, Kohle- oder Aramidefasern in Betracht.

Die Schicht aus Verstärkungsfasern umfaßt wenigstens eine Gewebeschicht.

Darüberhinaus können zusätzliche Faserschichten in Form von Geweben oder Gewirken oder ggfls. auch in Form von Vliesen vorgesehen sein.

Als thermoplastischer Kunststoff eignet sich besonders PA, PBT, PET, PEI, PES, PMMA oder ABS.

Versuche haben gezeigt, daß die mechanischen Eigenschaften der äußeren Helmkalotte nur sehr gering von der verwendeten Polymertype abhängen, wohingegen natürlich Verarbeitungs- und Oberflächen- sowie anderen Produkteigenschaften, wie Alterung, Farbe, Design und Kosten, stark an dem jeweils ausgewählten Kunststoff orientiert sind. Dementsprechend muß in Abhängigkeit von dem speziellen Verwendungszweck des Helmes und dem hieraus resultierenden Anforderungsprofil die Auswahl der Kunststoffart erfolgen.

Typischerweise ist die äußere Helmkalotte bei einer erfindungsgemäßen Konstruktion kleiner als 1,5 mm. Damit liegt die Dicke z.B. für Motorradhelme deutlich unter denjenigen von herkömmlichen Helmen, die durchweg größer als 2,2 mm ist und bezogen auf einen derartigen relativ großvolumigen Helm dementsprechend zu einem deutlich höheren Gewicht führt. Bei einer erfindungsgemäßen Außenkalotte für Motorradhelme kann die Dicke bei verbesserten Schutzeigenschaften typischerweise zwischen 1,3 und 1,5 mm liegen. Bei Radfahrer- oder Bergsteigerhelmen, die herkömmlicherweise Außenkalotten von mehr als 1,5 mm aufwiesen, kann die Dicke gemäß der Erindung sogar auf 0,7 bis 0,8 mm beschränkt werden.

Dies ist bedingt durch die hochfeste, extrem flexible und durchdringungsfeste Außenschale, die gemäß der Erfindung erreicht wird. Diese so erhaltene Außenschale ist auch selbsttragend und so eigensteif und verwindungsstabil, daß sie nicht lediglich als Außenhaut für die Innenkalotte wirkt, sondern formbestimmende Eigenschaften aufweist.

Die an sich in herkömmlicher Technik ausgestaltete Innenkalotte kann aufgrund der vorteilhaften Eigenschaften der Außenkalotte mit geringerer Dichte ausgeführt werden, da sie keine Formgebungseigenschaften aufzuweisen braucht. Darüberhinaus ist es möglich, in Teilbereichen größere Öffnungen in der Innerkalotte als herkömmlicherweise zu realisieren, da diese durch die selbsttragende, stoßfeste äußere Schale abgedeckt sind, was z.B. die Realisierung wirksamer Belüftungskanäle ermöglicht oder andererseits auch wieder zu einer Verminderung von Dicke und Gewicht führt.

Zur Herstellung eines erfindungsgemäßen Helms ist vorgesehen, daß ausgehend von einem flächig-ebenen Schichtmaterial umfassend die Schicht aus thermoplastischem Kunststoff und die wenigstens eine Schicht aus Verstärkungsfasern ein Zuschnitt erstellt wird, dieser Zuschnitt auf eine Temperatur oberhalb des Schmelzpunktes des thermoplastischen Kunststoffes erhitzt wird, und daß dann in einer Zieh-Preß-Form umfassend eine Matrize und eine Patrize die Helmform erzeugt und die Fertigkalotte dann aus der Form ausgeworfen wird.

Das Ausgangsmaterial kann in Form von Platten oder Bahnen vorliegen und unmittelbar vor dem Formgebungsprozeß zurechtgeschnitten bzw. gestanzt werden. Durch die kalte Außenwand der Form, die erforderlichenfalls auch gekühlt sein kann, erkaltet der thermoplastische Kunststoff während des Formgebungsvorganges vollständig, so daß eine fertige Aussenkalotte unmittelbar nach der Verformung ausgeworfen werden kann.

Das Grundmaterial in Form der Kunststoffplatte ist mit der wenigstens einen Gewebeschicht dadurch verbunden, daß die Gewebeschicht mit dem gleichen Kunststoff durchtränkt wird, indem dieser aufgeschmolzen wird, ein Lösungsmittel eingesetzt wird oder eine Pulverbeschichtung erfolgt. Darüberhinaus kann eine Verdichtung und Oberflächenglättung durch Erwärmen des Halbzeuges und flächiges Verpressen realisiert werden. Dieses Verpressen kann entweder diskontinuierlich auf einer Presse oder kontinuierlich im Durchlauf auf einer Doppelbandpresse oder zwischen zwei Walzen erfolgen.

Eine Besonderheit des erfindungsgemäßen Herstellungsverfahrens besteht darin, daß der Zuschnitt des plattenartigen Ausgangsmaterials längs seiner Außerränder in einem Halterahmen mit definiertem Haltedruck derart festgelegt wird, daß beim Tiefziehen die Verstärkungsfasern mit definierter Zugspannung herausgezogen und dementsprechend faltenfrei drapiert eingepreßt werden.

Mittels des Halterahmens ist es also möglich, eine solche Haltekraft einzustellen, die einerseits verhindert, daß das Verstärkungsgewebe bzw. gegebenenfalls weitere vorgesehene Verstärkungsschichten beim Tiefzieh-Vorgang frei mitgenommen werden, die andererseits aber niedrig genug ist, das Herausziehen des Gewebes, jedoch mit definiertem Widerstand zu ermöglichen.

Dieser Rahmen kann in Form eines Niederhalters ausgebildet sein, der auf den Zuschnitt zusammen mit der Patrize oder vor dieser abgesenkt wird, wobei der Außenrand der Matrize als Wiederlager für den als Niederhalter ausgebildeten Rahmen dient.

Ein derartiges Herstellungsverfahren weist gegenüber herkömmlichen Verfahren zur Herstellung von Sturz- bzw. Schutzhelmen zahlreiche Vorteile auf.

Insoweit besteht zunächst ein wesentlicher Vorteil darin, daß die Kombination von thermoplastischer Kunststoffschicht und Gewebeschicht als qualitätsbestimmendes Halbzeug vorliegt, wobei sich das Polymer im Endbestand der Molekularstruktur befindet. Dementsprechend ist der Herstellungsvorgang für die Erzielung einer bestimmten Endqualität nur von relativ untergeordneter Bedeutung, so daß unter dem Aspekt der Qualitätssicherung und damit der Sicherheit des fertigen Schutzhelmes ein entscheidender Fortschritt erzielt wurde.

Bei der Formgebung kann mit einer sehr kurzen Zykluszeit im Gegensatz zu der herkömmlichen Herstellung von Helmen aus glasverstärkten Kunststoffen gearbeitet werden, so daß ein hochproduktives Fertigungsverfahren für eine Produktion in Großserien zur Verfügung steht.

Im Ausgangsmaterial sind keine Monomere vorhanden und es existieren keine chemischen Reaktionsprodukte wie bei Duroplasten, was den Herstellungsvorgang ebenfalls einfach kontrollierbar und auch umweltfreundlich macht.

Zur Umweltfreundlichkeit trägt auch bei, daß das Material in hohem Maße recyclingfähig ist.

Letzlich eröffnet die Verwendung eines thermoplastischen Kunststoffes noch die Möglichkeit der Herstellung von Schweißverbindungen, was z.B. ein entscheidender Vorteil bei der Anbringung der Kinnpartie bei einem sogenannten Integralhelm für Motorradfahrer sein kann.

Nachfolgend wird die Erfindung anhand zweier Ausführungsbeispiele näher beschrieben:

### Beispiel 1: Einteilige Helmschale für einen Sporthelm, wie z.B. einen Fahrradhelm, Drachenfliegerhelm oder Bergsteigerhelm

Als Ausgangsmaterial wird ein plattenförmiges Halbzeug, 0,75 mm dick, enthaltend 3 lagen drapierfähigen Glasgewebes, das ca. 45 Vol-% einnimmt. Die Polymermatrix besteht aus Polybutylenterephtalat (PBTP).

Von diesem flächigen Halbzeug werden Platten entsprechend der benötigten Größe für den Umformvorgang zugeschnitten.

Das Material wird auf ca. 265°C +/- 10°C aufgeheizt und anschließend im Preß-Zieh-Verfahren zwischen einer Matrize und einer Patrize (Formtemperatur ca. 150°C) umgeformt.

Für diesen Umformvorgang ergibt sich bei kontinuierlicher, taktweiser Fertigung eine Taktzeit von ca. 70 sec. +/- 10 sec., d.h. es ist eine großtechnische Massenproduktion möglich.

Das fertigverformte Formteil wird anschließend besäumt. In Verbindung mit einer innerhalb des Formlings, d.h. der äußeren Helmkalotte, angebrachten inneren Helmkalotte aus Hartschaum (Expandiertes Polystyrol) mit einer Dicke von 26 mm +/- 2 mm und einem Volumengewicht von 80 kg/m + /- 10 kg m erfüllt eine solche Helmschale bzw. eine solche Helmschalenkombination alle bekannten Normen für die genannten Anwendungsfälle.

### Beispiel 2: Zweiteilige Helmschale als Motorradfahrer-Schutzhelm (Integralhelm)

Ausgangsmaterial ist wiederum ein flächiges Halbzeug, 1,3 +/- 0,2 mm dick. Dieses enthält 5 bis 7 lagen drapierfähigen Glas-Gewebes, welches ca. 45 Vol-% des Gesamtmaterials ausmacht. Die Polymermatrix besteht aus Polyetylenterephtalat (PETP).

Entsprechend der Vorgehensweise in Beispiel 1 werden zwei Teilschalen hergestellt entsprechend dem Über-Kopfteil der äußeren Helmkalotte und dem Kinn- und Nackenbereich der äußeren Helmkalotte. Die Notwendigkeit zur Herstellung von zwei gesonderten Formteilen liegt darin, daß das erfindungsgemäß zur Anwendung kommende Herstellverfahren die Ausbildung einer hintergeschnittenen Gestaltung nicht zuläßt.

Die Umformung erfolgt nach Aufheizung auf eine Temperatur von 265°C +/- 10°C und anschließendem Preß-Zieh-Verfahren, wobei die Temperatur der Form wieder ca. 150°C aufweist.

Bei diesem Herstellungsverfahren wird eine Taktzeit vom Beginn der Materialaufheizung bis zur Entnahme der jeweiligen Schalenhälfte von ca. 90 sec. +/- 15 sec. erreicht. Durch Vorheizung parallel zum vorangehenden Umformschritt läßt sich die Taktzeit auf ca. 60 sec. verkürzen.

Nach Herstellung der Formlinge werden sie besäumt und zur vollständigen Integralhelmschale, z.B. durch Schweißen, verbunden; wobei die Vorteile des verwendeten thermoplastischen Materials ausgenutzt werden können. Die Innenauskleidung dieser Helmschale erfolgt in an sich bekannter Weise mittels einer Innenkalotte aus expandiertem Polystyrol.

## Patentansprüche

1. Helm, insbesondere Schutz- bzw. Sturshelm für Motorradfahrer, Radfahrer, Arbeiter und Sportler, umfassend eine hartschalenartige, äußere Helmkalotte aus einem Kunststoff hoher Festigkeit und Flexibilität und eine innere Helmkalotte aus weichem Kunststoff, wie Hartschaum oder dergleichen, **dadurch gekennzeichnet, daß** er eine selbsttragende, äußere Helmkalotte aufweist, die gebildet ist durch eine Schicht aus thermoplastischem Kunststoff und wenigstens eine Schicht aus Verstärkungsfasern, wobei die beiden Schichten durch gemeinsames Tiefziehen bei einer Temperatur über dem Schmelzpunkt des Kunststoffes in die Kalottenform gebracht sind.

2. Helm nach Anspruch 1**, dadurch gekennzeichnet, daß** der Anteil an Verstärkungsfasern mehr als 40 Volumen-% trägt.

3. Helm nach Anspruch 2, **dadurch gekennzeichnet, daß** die Verstärkungsfasern Glas-, Kohle- oder Aramidfasern sind.

4. Helm nach Anspruch 1, **dadurch gekennzeichnet, daß** die Schicht aus Verstärkungsfasern wenigstens eine Gewebeschicht umfaßt.

5. Helm nach Anspruch 4, **dadurch gekennzeichnet, daß** die Schicht aus Verstärkungsfasern zusätzliche Faserschichten in Form von Geweben oder Gewirken umfaßt.

6. Helm nach Anspruch 1, **dadurch gekennzeichnet, daß** der thermoplastische Kunststoff aus PA, PBT, PET, PEI, PES, PMMA oder ABS besteht.

7. Helm nach Anspruch 1, **dadurch gekennzeichnet, daß** die Dicke der äußeren Helmkalotte kleiner als 1,5 mm ist.

8. Helm nach Anspruch 1, **dadurch gekennzeichnet, daß** die innere Helmkalotte aus einem nicht selbsttragenden Hartschaum relativ geringer Dichte besteht und formschlüssig in die Außenkalotte angepaßt ist.

9. Verfahren zur Herstellung eines Helms nach einem der Ansprüche 1 bis 8, **dadurch gekennzeichnet, daß** ausgehend von einem flächig-ebenen Schichtmaterial umfassend die Schichten aus thermoplastischem Kunststoff und die wenigstens eine Schicht aus Verstärkungsfasern ein Zuschnitt erstellt wird, der Zuschnitt auf eine Temperatur oberhalb des Schmelzpunktes des thermoplastischen Kunststoffes erhitzt wird, und daß dann in einer Zieh-Preß-Form umfassend eine Matrize und eine Patrize die Helmform erzeugt und die fertige Kalotte anschließend aus der Form ausgeworfen wird.

10. Verfahren nach Anspruch 9, **dadurch gekennzeichnet, daß** der Zuschnitt längs seiner Außenränder in einem Halterahmen mit definiertem Haltedruck derart festgelegt wird, daß beim Tiefziehen die Verstärkungsfasern mit definierter Zugspannung herausgezogen und dementsprechend faltenfrei drapiert werden.

11. Verfahren nach Anspruch 10, **dadurch gekennzeichnet, daß** der Halterahmen in Form eines gegen die Unterlage für den Zuschnitt drückenden Niederhalters vor der Patrize abgesenkt wird.
